# EUROPEAN PATENT SPECIFICATION

(11) **EP 1 478 971 B1**
(45) Date of publication and mention of the grant of the patent: **31.12.2008**
(21) Application number: 03702881.8
(22) Date of filing: 12.02.2003
(51) Int. Cl.: G02F 1/1362

(54) **LIQUID CRYSTAL DISPLAY DEVICE**
FLÜSSIGKRISTALLANZEIGE
DISPOSITIF D'AFFICHAGE A CRISTAUX LIQUIDES

(30) Priority: 13.02.2002 JP 2002035946
(43) Date of publication of application: 24.11.2004
(73) Proprietor: TPO Hong Kong Holding Limited, Shatin, Hong Kong (CN)
(72) Inventor: HATTA, Yoshihisa, NL-5656 AA Eindhoven (NL)
(74) Representative: Hutter, Jacobus Johannes
(86) International application number: PCT/IB2003/000569
(87) International publication number: WO 2003/069401

(56) References cited:
- EP-A- 1 008 896
- EP-A- 1 111 436
- US-A- 5 847 785
- US-B1- 6 323 924

## Description

### BACKGROUND OF THE INVENTION

### 1. Field of the Invention

The present invention relates to a liquid crystal display device in which a liquid crystal material is sealed by a sealing member between a first substrate having a first conductive member and a second substrate having a second conductive member, and more particularly, to a narrow-framed liquid crystal display device whose area other than the display area is reduced.

### 2. Description of Related Art

With electronic devices provided with a liquid crystal display device represented by a cellular phone and personal computer getting rapidly widespread in recent years, there is a strong demand for a liquid crystal display device realizing miniaturization and cost reduction. While there is such a strong demand for miniaturization of the entire device, there is another demand that the area of the display section should be expanded. For this purpose, a process of narrowing the width of the portion peripheral to the display section (frame section), or so-called "frame-narrowing" is underway. The peripheral portion is a space disposed with wiring for supplying power to TFTs (thin film transistors) used for switching of a liquid crystal material and terminals for bonding IC chips making up a driving circuit and this space is conventionally disposed with circuits on all the peripheral portions at the upper edge, lower edge, right edge and left edge. However, with the progress of frame-narrowing, the circuits are recently provided only on the lower peripheral portion. On the other hand, with respect to the demand for cost reduction, there is a demand for a reduction of the number of masks at the manufacturing stage. In response to this demand, patterning of layers made of different materials is realized with a single mask.

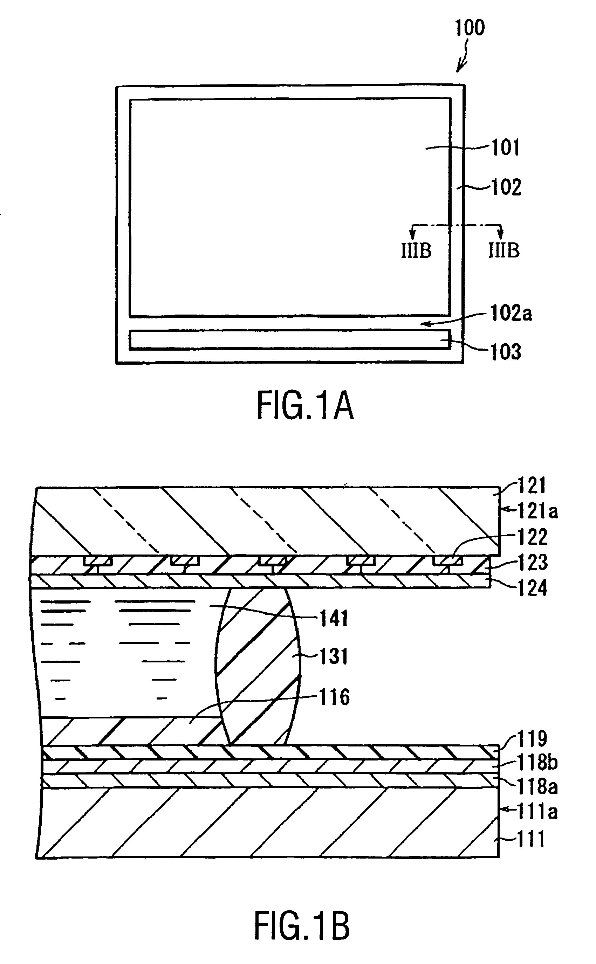

Figs.1A and 1B show an exemplary structure of a conventional liquid crystal display device when both of the above-described frame-narrowing and reduction of the number of masks are realized. Fig.1A is a plan view of the device and Fig.1B is a cross sectional view of the device taken along a line IIIB-IIIB of Fig. 1A. When viewed from the top, this liquid crystal display device 100 is constructed of a display section 101 and a peripheral portion 102 around the display section 101. On the lower peripheral portion 102a of the peripheral portion 102, there is a circuit 103 provided with a display section driving circuit electrically connected to the display section 101 and a controller for controlling the driving circuit and the remaining three sides remain free, intended to enhance the effect of frame-narrowing.

As shown in Fig.1B, this liquid crystal display device 100 has a configuration that a liquid crystal material 141 is disposed between a driving substrate 111 and an opposite substrate 121 and the liquid crystal material 141 is sealed by a sealing member 131 provided in a boundary area between the display section 101 and the peripheral portion 102. On the driving substrate 111, a wiring layer 118a of indium tin oxide (ITO) and a wiring layer 118b of an alloy of molybdenum (Mo) and chromium (Cr) are formed and these layers extend to an edge of the driving substrate 111. An insulating layer 119 is formed on the wiring layer 118b and a flattening film 116 is formed inside the sealing member 131 on the insulating layer. The wiring layers 118a and 118b are created through patterning by means of a single mask. As the material of the insulating layer 119, for example, silicon nitride (SiNx) is used considering adhesion to the material of the sealing member 131. On the other hand, the opposite substrate 121 is provided with an opposite electrode 124 that extends to or near to an edge of the opposite substrate 121 together with a light shielding film (black matrix) 122 and a color filter 123.

In the liquid crystal display device 100, at the peripheral portion in the above-described free state, that is, the area where no circuit exists, the end (parting plane) 111a of the driving substrate 111 and the end 121a of the opposite substrate 121 form a so-called flush-structure. At the lower peripheral portion 102a provided with the circuit 103 of the peripheral portion 102, the driving substrate 111 is larger than the opposite substrate 121 so that the wiring layers 118a and 118b on the driving substrate side do not face the opposite electrode 124 on the opposite substrate side. However, in the area where no circuit exists, the wiring layers 118a and 118b are disposed opposite to the opposite electrode 124 even at the edge of the substrate. In this area, the ends of the wiring layers 118a and 118b are exposed without being covered with any insulating layer due to the aforementioned mask-saving process and the ends of the wiring layers 118a and 118b have direct contact with the atmosphere. When the device is driven in this condition, an electric field is produced between the wiring layers 118a and 118b and opposite electrode 124 facing mutually due to a potential difference therebetween, and the portions of the wiring layers 118a and 118b that have contact with the atmosphere are subject to a chemical reaction with water, etc., in the atmosphere, which leads to a problem of corrosion of the wiring layers 118a and 118b. Thus, efforts to realize miniaturization and cost reduction with the conventional liquid crystal display device end up with a problem that the reliability of the device degrades due to corrosion of the wiring layers and the problem becomes more conspicuous especially when the wiring layers are made of metal.

US 6,323,924 B1 discloses the liquid crystal display device 200, which includes the liquid crystal layer 13 between the first an d second transparent insulating substrates 11 and 12, on which the aluminum ally film 14 is formed and the sealing material 19 is provided. The surface of the first substrate 11 is exposed by the slits 14a cut in the aluminum alloy film 14 to prevent peeling off of the planarizing insulation film 15 (referring to col. 3 1. 65 to col. 41. 23 and Fig. 5 of US 6,323,924).

EP 1008896 A1 discloses the display panel PNL, which includes the upper and lower glass substrates SUB1, SUB2 and the liquid crystal layer LC therebetween. The organic layer PSV2 is formed on the lower glass substrates SUB 1 to enhance the flatness (referring to paragraphs [0044], [0071] and Fig. 6 of EP 1008896 A1)

EP 1111436 A2 discloses the reflective liquid crystal display element, which includes the lower substrate 101, the undulated layer 102, the reflective layer 103, the flattened layer 106, the transparent electrode 107, the sealant 108, the liquid crystal layer 109, the upper transparent substrate 110, the external circuit board 114 and the anisotropic conductive layer adhesive 115, in which the undulated layer 102 is not formed at the connection terminal between the lower substrate 101 side of the liquid crystal cell 111 and the external circuit board 114. Hence, the reliability of electric connection and physical connection of the terminal and transparent electrode 107 can be enhanced (referring to paragraphs [0017], [0032] and Fig. 1A of EP 1111436 A2).

US 5,847,785 A discloses the liquid crystal display device, which includes the small substrates 50, 51 and the counter substrate 53 so as to seal therein the liquid crystal layer 54, the first seal material 520 1 made of a photo-setting resin formed along connecting sides between the liquid crystal panels, and the second seal material made of a thermosetting resin formed along other sides than the connecting sides. As a result, a hardening inferior of the seal material as well as a display inferior of the liquid crystal panel can be prevented (referring to col. 10 lines 55-67 and Fig. 7 of US 5,847,785 A).

### SUMMARY OF THE INVENTION

The present invention has been implemented in view of the above-described problems and it is an object of the present invention to provide a liquid crystal display device capable of realizing miniaturization and cost reduction as well as providing high reliability, and more specifically, to provide a high reliability liquid crystal display device with corrosion of wiring layers in the peripheral portion suppressed.

The liquid crystal display device according to the present invention comprises a first substrate having a first conductive member, a second substrate disposed opposite to the first substrate with a given space therebetween and having a second conductive member on its surface opposite to the first conductive member of the first substrate, a sealing member disposed between the first substrate and the second substrate and a liquid crystal layer formed by a liquid crystal material sealed by the sealing member in the space between the first substrate and the second substrate, characterized in that a side face of the first substrate and a side face of the second substrate corresponding to the side face of the first substrate are present substantially in the same plane, that the first conductive member extends to an edge of the side face of the first substrate, an end of the first conductive member on a side of the side face of the first substrate having a possibility to contact with the atmosphere, the second conductive member extending to or near to an edge of the side face of the second substrate, and that a dielectric member having a relative dielectric constant equal to or less than 5 is disposed between the first conductive member and the second conductive member at least on the side of the sealing member remote from the liquid crystal layer.

Since the liquid crystal display device according to the present invention is provided with a dielectric member having a relative dielectric constant equal to or less than 5 between the first conductive member and the second conductive member on the side of the sealing member remote from the liquid crystal layer, a potential difference between the first conductive member and second conductive member becomes relatively smaller during driving and the electric field produced therebetween is reduced. For this reason, corrosion of the part of the end of the first conductive member that has contact with the atmosphere is suppresses and the device has high reliability.

Furthermore, for the liquid crystal display device according to the present invention, it is preferable that the dielectric member extends to the edge of the side face of the first substrate. This suppresses corrosion of the first conductive member more effectively, and can thereby further improve the reliability of the device.

Furthermore, for the liquid crystal display device according to the present invention, it is preferable that the first substrate is further provided with depressions or projections which are spaced apart from each other on the same side as that on which the first conductive member is provided, and a reflecting film which is rendered uneven under the influence of the depressions or projections and has a function of reflecting a light and that the dielectric member is provided so as to extend from the side of the sealing member remote from the liquid crystal layer to the side of the liquid crystal layer as an integral member, the dielectric member being disposed between the depressions or projections and the reflecting film on the liquid crystal layer's side of the sealing member. In the case of such a reflective type liquid crystal display device, providing the dielectric member from the side of the sealing member remote from the liquid crystal layer to the side of the liquid crystal layer as an integral member allows a single layer to have each functions of the sealing member on the liquid crystal layer's side and the remote side of the sealing member. This simplifies the configuration of the device. In this case, it is preferable that the dielectric member is in contact with the sealing member and that the dielectric member is made of a resin and the sealing member is made of a thermosetting resin because this will enhance adhesion therebetween.

### BRIEF DESCRIPTION OF THE DRAWINGS

Fig. 1A is a plan view of a conventional exemplary liquid crystal display device, and Fig. 1B is a cross sectional view of the device taken along a line IIIB-IIIB of Fig. 1A.
Fig. 2 is a cross sectional view of a liquid crystal display device according to an embodiment of the invention;
Fig. 3 is another cross sectional view of the liquid crystal display device according to the embodiment of the invention;

### DESCRIPTION OF THE PREFERRED EMBODIMENT(S)

With reference now to the accompanying drawings, an embodiment of the present invention will be described in detail below.

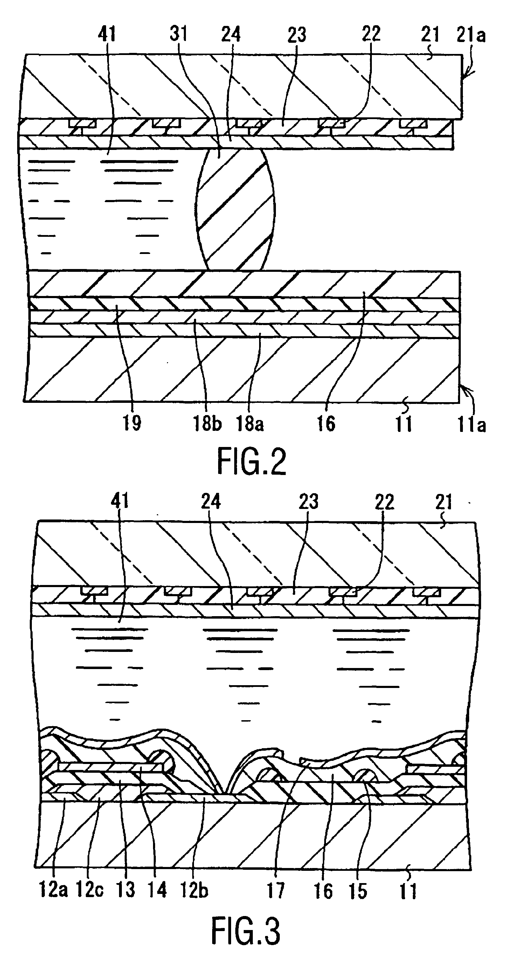

First, a configuration of a liquid crystal display device according to an embodiment of the present invention will be explained. Figs.2 and 3 show the liquid crystal display device according to this embodiment. When viewed from the top, the liquid crystal display device according to this embodiment is constructed of a display section and a peripheral portion peripheral to the display section as in the case of above-described Fig.1A and is provided with a circuit on one side of the peripheral portion. Fig.2 is a cross sectional view of the area of the peripheral portion where no circuit exists and its periphery, and Fig.3 is a cross sectional view of the display section.

This liquid crystal display device is provided with a driving substrate 11 as a first substrate and an opposite substrate 21 as a second substrate disposed opposite to the driving substrate 11 with a given space therebetween and a sealing member 31 is disposed between the driving substrate 11 and the opposite substrate 21. A liquid crystal layer 41 is formed by a liquid crystal material sealed by the sealing member 31 in the space between the driving substrate 11 and the opposite substrate 21. The driving substrate 11 and the opposite substrate 21 form a so-called "flush-structure" in the area of the peripheral portion without any circuit (Fig.2) in which their respective side faces 11a and 21a are present substantially in the same plane.

In the display section, as shown in Fig.3, the driving substrate 11 is provided, on its surface facing the opposite substrate, with source electrodes 12a electrically connected to respective data lines and drain electrodes 12b, with a space being disposed therebetween, and a semiconductor layer 12c is formed adjacent to the source electrodes 12a and the drain electrodes 12b. Gate electrodes 14 electrically connected to respective scanning lines (not shown) are formed on the side of the semiconductor layer 12c remote from the driving substrate 11, with a gate insulating film 13 having an opening being formed between the semiconductor layer 12c and the gate electrodes 14. Thus, TFTs are provided on the side of the driving substrate 11 facing the opposite substrate 21. The TFTs are placed in a form of, for example, a matrix in a one-to-one correspondence with pixel electrodes, which will be described later. A pattern of depressions or projections 15 provided with a space therebetween is formed on the gate insulating film 13 and the gate electrode 14 and a flattening film 16 is provided, as a dielectric material, on the pattern of depressions or projections 15 with an opening. A reflecting film (reflecting electrode) 17 also functioning as a pixel electrode is formed on the flattening film 16. The reflecting film 17 is electrically connected, for example, with the drain electrodes 12b through the openings provided in the flattening film 16 and the gate insulating film 13 and voltages are applied thereto using the above-described TFTs. The driving substrate 11 is further provided with an orientation film (not shown), and so on.

Furthermore, in the area or in the vicinity of the peripheral portion of this liquid crystal display device where no circuit exists, the wiring layers 18a and 18b are formed as the first conductive members on the side of the driving substrate 11 opposite to the opposite substrate 21 as shown in Fig.2. These wiring layers 18a and 18b extend to an edge constituting the side face 11 a of the driving substrate 11, which has a possibility to contact with the atmosphere. The wiring layer 18a is made, for example, of ITO and used as a terminal of the display section. The wiring layer 18b is made, for example, of an alloy of molybdenum and chromium, forming a data line. On the wiring layers 18a and 18b, the flattening film 16 extends, for example, to the edge constituting the side face 11 a of the driving substrate 11, with the insulating film 19 being formed between the wiring layer 18b and the flattening film 16.

The above-described components on the driving substrate 11 are created in such a way that, for example, the source electrodes 12a, the drain electrodes 12b and the wiring layers 18a and 18b are patterned, the semiconductor layer 12c is patterned, the gate insulating film 13 is patterned, and then the gate electrodes 14, depressions or projections 15, the flattening film 16 and the reflecting electrode 17 are patterned one by one.

On the other hand, a light shielding film 22, a color filter 23, the opposite electrode 24 as the second conductive member and an orientation film (not shown), etc., are formed on the surface of the opposite substrate 21 facing the driving substrate side. The opposite electrode 24 extends to or near to the edge of the side face 21a of the opposite substrate 21 (near the edge in Fig.2). Though not shown here, a polarizing plate, etc., is formed on the side of the opposite substrate 21 remote from the driving substrate 11.

Secondly, the flattening film 16, which constitutes a characteristic portion of the liquid crystal display device according to this embodiment, will be explained in more detail below.

The flattening film 16 is made of a dielectric member having a relative dielectric constant equal to or less than 5, or more preferably equal to or less than 3.5, for example, 2 to 3.5, and more specifically made of, for example, a resin. This flattening film 16 is intended to adjust unevenness of the reflecting film 17 rendered uneven by the patterned depressions or projections 15 (refer to Japanese Patent Application No.2001-308737). In this embodiment, the flattening film 16 made of the above-described dielectric member is disposed up to an edge of the driving substrate 11 and inserted between the wiring layers 18a and 18b and the opposite electrode 24, each extending to the edge of the substrate, and therefore a potential difference between the wiring layers 18a and 18b and opposite electrode 24 during driving is relatively small and the intensity of the electric field therebetween is also small. Considering the function as the dielectric in such a peripheral portion of the apparatus, the smaller the relative dielectric constant of the dielectric member constituting the flattening film 16, the more preferable. The reason that the relative dielectric constant is set to be equal to or less than 5 is that with a relative dielectric constant exceeding 5, it would be impossible to obtain a sufficient effect unless the film thickness is increased considerably. The thickness of the flattening film 16 is, for example, 1 µm to 5 µm.

In this embodiment, the sealing member is provided on and in contact with the flattening film 16 and the level of adhesion between the flattening film 16 and the sealing member 31 is required to be high. For this reason, when the resin is used as the material of the flattening film 16, it is preferable to use a thermosetting resin for the sealing member 31.

The liquid crystal display device with the above-described configuration will operate as follows.

In this liquid crystal display device, a scanning voltage is sequentially supplied from the circuit to the gate lines through the wiring layer 18a cyclically and signal voltages are selectively supplied to the respective wiring layers 18b (data lines) in accordance with image signals. A given voltage is constantly supplied to the opposite electrode 24. The signal voltages are supplied to the reflecting electrodes (pixel electrodes) 17 through TFTs which have turned on with a scanning voltage supplied sequentially, which provides a voltage to the liquid crystal layer 41 between the opposite electrode 24 and the reflecting electrode 17 and allows a desired image display to be performed.

In this case, since the flattening film 16 made of a dielectric member having a relative dielectric constant equal to or less than 5 is formed between the wiring layers 18a and 18b and the opposite electrode 24 in the area of the peripheral portion where no circuit exists, the potential difference between the wiring layers 18a and 18b and the opposite electrode 24 becomes relatively smaller and the electric field produced therebetween is reduced. This suppresses corrosion of the areas of the wiring layers 18a and 18b in contact with the atmosphere.

As described above, the liquid crystal display device according to this embodiment is provided with the flattening film 16 made of a dielectric member having a relative dielectric constant equal to or less than 5 between the wiring layers 18a and 18b and the opposite electrode 24, and can thereby reduce the potential difference between the mutually facing wiring layers 18a and 18b and opposite electrode 24 in the area of the peripheral portion where no circuit exists when a voltage is applied to the wiring layers 18a and 18b and the opposite electrode 24 and reduce the electric field produced therebetween due to this potential difference. Therefore, even when the ends of the wiring layers 18a and 18b contact with the atmosphere, a reaction between the wiring layers 18a and 18b and water, etc., in the atmosphere is suppressed so that the corrosion rate of the wiring layers 18a and 18b can be reduced considerably. Thus, this embodiment can implement a small, highly reliable liquid crystal display device in fewer patterning steps and make the device highly reliable even in a high temperature, high humidity operating environment in particular.

Furthermore, with the above-mentioned liquid crystal display device, since the flattening film for adjusting unevenness on the surface of the reflecting film 17 is further extended to insert the dielectric member between the wiring layers 18a and 18b and the opposite electrode 24, it is possible to suppress corrosion of the wiring layers 18a and 18b with a simple structure without providing any additional film, realizing cost reduction in this respect, too.

Furthermore, composing the flattening film 16 of a resin and composing the sealing member 17 of a thermosetting resin can enhance adhesion between the flattening film 16 and the sealing member 17 and thereby implement a high reliability liquid crystal display device.

The present invention has been explained with reference to the embodiment, but the present invention is not limited to the above-described embodiment and can be modified in various ways. For example, the above-described embodiment has described the case where the flattening film necessary inside the display section is extended to an edge of the driving substrate, but it is also possible to insert a dielectric member, in the peripheral portion, between the wiring layers 18a and 18b and the opposite electrode 24 aside from the flattening film 16. Moreover, the above-described dielectric member need not necessarily be extended to an edge of the substrate, but the effect of the present invention can be obtained when the dielectric member is provided into, in the peripheral portion, at least a part between the wiring layers 18a and 18b and the opposite electrode 24.

Furthermore, the above-described embodiment has described an example of the first conductive member having a multilayer structure consisting of the wiring layers 18a and 18b, but the first conductive member can also have a single-layer structure. The second conductive member may have a multilayer structure.

Furthermore, the above-described embodiment has described an example of a patterning method on the driving substrate, but the present invention is also effective for a device manufactured using any method other the above-described patterning method if the device has a structure that the end faces of the wiring layers 18a and 18b contact with the atmosphere.

Furthermore, the above-described embodiment has described the liquid crystal display device provided with so-called top gate type TFTs, but the device can also be adapted so as to have so-called bottom gate type TFTs. Furthermore, the above-described embodiment has described the liquid crystal display device with an active matrix display using TFTs as switching elements, but the device can also be adapted so as to have other switching elements such as MOSFET (metal oxide semiconductor field effect transistor). Moreover, the present invention is also applicable to a passive matrix display device without using any switching element.

Furthermore, the above-described embodiment has described the reflective type liquid crystal display device, but the present invention is also applicable to a liquid crystal display device having a combined structure of a reflective type and transmission type or a liquid crystal display device with the reflecting film 17 whose thickness is reduced so as to reflect part of light and allow part of light to penetrate. In addition, the present invention is also applicable to a transmission type liquid crystal display device, in which case a flattening film provided on the driving substrate to increase an open area ratio can also be used in the same way as the above-described flattening film 16.

## Claims

1. A liquid crystal display device comprising:
a first substrate (11) having a first conductive wiring member (18a, 18b);
a second substrate (21) disposed opposite to the first substrate (11) with a given space therebetween and having a second conductive member (24) on its surface opposite to the first conductive member (18a, 18b) of the first substrate (11); a sealing member (31) disposed between the first substrate (11) and the second substrate (21); and
a liquid crystal layer (41) formed by a liquid crystal material sealed by the sealing member (31) in the space between the first substrate (11) and the second substrate (21),
a side face (11a) of the first substrate (11) and a corresponding side face (21a) of the second substrate (21) corresponding to said side face (11a) of the first substrate (11) which are present substantially in the same plane;
wherein the first conductive member (18a, 18b) extends to an edge of said side face (11a) of the first substrate (11), the end face of the first conductive member (18a, 18b) on a side of said side face (11a) of the first substrate (11) being in contact with the atmosphere, the second conductive member (24) extending to or near said side face (21 a) of the second substrate (21); and **characterized in that**
the first substrate (11) is further provided with depressions or projections (15) which are spaced apart from each other and arranged on the same side of the first substrate as that on which the first conductive member (18a, 18b) is provided, and a reflective film (17) which is rendered uneven under the influence of the depressions or projections (15) and has a function of reflecting a light;
and **in that** a dielectric member (16) having a relative dielectric constant equal to or less than 5 is disposed between the first conductive member (18a, 18b) and the second conductive member (24) at least on the side of the sealing member (31) remote from the liquid crystal layer (41), and the dielectric member (16) is disposed between the depressions or projections (15) and the reflective film (17) on the liquid crystal layer's (41) side of the sealing member(31).

2. A liquid crystal display device as Claimed in claim 1, **characterized in that** the dielectric member (16) extends to the edge of the side face (11a) of the first substrate (11).

3. A liquid crystal display device as claimed in claim 1 or 2, **characterized:**
**in that** the dielectric member (16) is provided so as to extend from the side of the sealing member (31) remote from the liquid crystal layer (41) to the side of the liquid crystal layer (41) as an integral member.

4. A liquid crystal display device as claimed in claim 3, **characterized in that** the dielectric member (16) is in contact with the sealing member (31).

5. A liquid crystal display device as claimed in claim 4, **characterized in that** the dielectric member (16) is made of a resin and the sealing member (31) is made of a thermosetting resin.

## Patentansprüche

1. Flüssigkristalldisplayeinrichtung, die umfasst:
ein erstes Substrat (11), das ein erstes leitfähiges Verdrahtungselement (18a, 18b) aufweist;
ein zweites Substrat (21), das gegenüber dem ersten Substrat (11) mit einem gegebenen Abstand dazwischen angeordnet ist und ein zweites leitfähiges Element (24) auf dessen Oberfläche gegenüber dem ersten leitfähigen Element (18a, 18b) des ersten Substrats (11) aufweist;
ein Dichtungselement (31), das zwischen dem ersten Substrat (11) und dem zweiten Substrat (21) angeordnet ist;
eine Flüssigkristallschicht (41), die mittels eines Flüssigkristallmaterials ausgebildet ist, das mittels des Dichtungselements (31) in dem Raum zwischen dem ersten Substrat (11) und dem zweiten Substrat (21) abgedichtet ist,
wobei eine Seitenfläche (11a) des ersten Substrats (11) und eine entsprechende Seitenfläche (21a) des zweiten Substrats (21), die der Seitenfläche (11a) des ersten Substrats (11) entspricht, im Wesentlichen in derselben Ebene vorliegen;
bei der sich das erste leitfähige Element (18a, 18b) zu einer Kante der Seitenfläche (11a) des ersten Substrats (11) erstreckt, sich die Endfläche des ersten leitfähigen Elements (18a, 18b) auf einer Seite der Seitenfläche (11a) des ersten Substrats (11) mit der Atmosphäre in Kontakt befindet, sich das zweite leitfähige Element (24) zur oder in die Nähe der Seitenfläche (21a) des zweiten Substrats (21) erstreckt; und
**dadurch gekennzeichnet, dass** das erste Substrat (11) ferner mit Vertiefungen oder Vorsprüngen (15), die voneinander beabstandet sind und auf derselben Seite des ersten Substrats wie die, auf der das erste leitfähige Element (18a, 18b) vorgesehen ist, angeordnet sind, und einem reflektierenden Film (17) vorgesehen ist, der unter dem Einfluss der Vertiefungen oder Vorsprünge (15) ungleichmäßig vorliegt und eine Funktion des Reflektierens von Licht aufweist;
und **dadurch**, dass ein dielektrisches Element (16), das eine relative Dielektrizitätskonstante gleich oder kleiner als 5 aufweist, zwischen dem ersten leitfähigen Element (18a, 18b) und dem zweiten leitfähigen Element (24) wenigstens auf der Seite des Dichtungselements (31) entfernt von der Flüssigkristallschicht (41) angeordnet ist und das dielektrische Element (16) zwischen den Vertiefungen oder Vorsprüngen (15) und dem reflektierenden Film (17) auf der Seite der Flüssigkristallschicht (41) des Dichtungselements (31) angeordnet ist.

2. Flüssigkristalldisplayeinrichtung nach Anspruch 1, **dadurch gekennzeichnet, dass** sich das dielektrische Element (16) zur Kante der Seitenfläche (11a) des ersten Substrats (11) erstreckt.

3. Flüssigkristalldisplayeinrichtung nach Anspruch 1 oder 2, **dadurch gekennzeichnet, dass** das dielektrische Element (16) so vorgesehen ist, dass es sich von der Seite des Dichtungselements (31) entfernt von der Flüssigkristallschicht (41) zur Seite der Flüssigkristallschicht (41) als ein integrales Element erstreckt.

4. Flüssigkristalldisplayeinrichtung nach Anspruch 3, **dadurch gekennzeichnet, dass** sich das dielektrische Element (16) mit dem Dichtungselement (31) in Kontakt befindet.

5. Flüssigkristalldisplayeinrichtung nach Anspruch 4, **dadurch gekennzeichnet, dass** das dielektrische Element (16) aus einem Harz gefertigt ist und das Dichtungselement (31) aus einem wärmehärtbaren Harz gefertigt ist.

## Revendications

1. Dispositif d'affichage à cristaux liquides comprenant :
un premier substrat (11) ayant un premier élément de câblage conducteur (18a, 18b) ;
un second substrat (21) disposé en face du premier substrat (11) en laissant un espace donné entre les deux substrats, et ayant un second élément conducteur (24) sur sa surface opposée au premier élément de câblage conducteur (18a, 18b) du premier substrat (11) ; un élément d'étanchéité (31) disposé entre le premier substrat (11) et le second substrat (21) ; et
une couche de cristaux liquides (41) formée par un matériau de cristal liquide enfermé hermétiquement par l'élément d'étanchéité (31) dans l'espace existant entre le premier substrat (11) et le second substrat (21) ;
une face latérale (11a) du premier substrat (11) et une face latérale (21a) correspondante du second substrat (21) correspondant à ladite face latérale (11a) du premier substrat (11) qui sont présentent sensiblement dans le même plan ;
dans lequel le premier élément conducteur (18a, 18b) s'étend jusqu'à un bord de ladite face latérale (11a) du premier substrat (11), la face d'extrémité du premier élément conducteur (18a, 18b) sur un côté de ladite face latérale (11a) du premier substrat (11) étant en contact avec l'atmosphère, le second élément conducteur (24) s'étendant jusqu'à, ou près de ladite face latérale (21a) du second substrat (21) ; et **caractérisé en ce que** :
le premier substrat (11) est, en outre, muni de creux ou de saillies (15) qui sont espacés les uns des autres et qui sont agencés du même côté du premier substrat (11) que celui sur lequel le premier élément conducteur (18a, 18b) est fourni, et un film réfléchissant (17) qui est rendu inégal sous l'influence des creux ou des saillies (15) et a une fonction de réfléchissement de la lumière ;
et **en ce que** qu'un élément diélectrique (16) ayant une constante diélectrique relative égale ou inférieure à 5 est disposé entre le premier élément conducteur (18a, 18b) et le second élément conducteur (24), au moins sur le côté de l'élément d'étanchéité (31) éloigné de la couche de cristaux liquides (41), et l'élément diélectrique (16) est disposé entre les creux ou les saillies (15) et le film réfléchissant (17) sur le côté de la couche de cristaux liquides (41) de l'élément d'étanchéité (31).

2. Dispositif d'affichage à cristaux liquides selon la revendication 1, **caractérisé en ce que** l'élément diélectrique (16) s'étend jusqu'au bord de la face latérale (11a) du premier substrat 11.

3. Dispositif d'affichage à cristaux liquides selon la revendication 1 ou 2, **caractérisé en ce que** :
l'élément diélectrique (16) est fourni de façon à s'étendre entre le côté de l'élément d'étanchéité (31) éloigné de la couche de cristaux liquides (41) et le côté de la couche de cristaux liquides (41) en tant qu'élément en une seule pièce.

4. Dispositif d'affichage à cristaux liquides selon la revendication 3, **caractérisé en ce que** l'élément diélectrique (16) est en contact avec l'élément d'étanchéité (31).

5. Dispositif d'affichage à cristaux liquides selon la revendication 4, **caractérisé en ce que** l'élément diélectrique (16) est composé d'une résine et l'élément d'étanchéité (31) est composé d'une résine thermodurcissable.
